# EUROPEAN PATENT SPECIFICATION

(11) **EP 3 254 505 B1**
(45) Date of publication and mention of the grant of the patent: **29.05.2019**
(21) Application number: 16702006.4
(22) Date of filing: 21.01.2016
(51) Int. Cl.: H04W 52/02

(54) **TRAFFIC INDICATION MAP ASSOCIATION MECHANISM FOR LOW-ENERGY DEVICES**
VERKEHRSANZEIGEKARTENASSOZIATIONSMECHANISMUS FÜR VORRICHTUNGEN MIT NIEDRIGER LEISTUNG
MÉCANISME D'ASSOCIATION DE CARTE D'INDICATION DE TRAFIC DESTINÉ À DES DISPOSITIFS À BASSE ÉNERGIE

(30) Priority: 03.02.2015 US 201514612559
(43) Date of publication of application: 13.12.2017
(73) Proprietor: Telefonaktiebolaget LM Ericsson (publ), 164 83 Stockholm (SE)
(72) Inventor: YILMAZ, Osman Nuri Can, 02320 Espoo (FI); ZHAO, Yue, 02150 Espoo (FI); LARMO, Anna, 02600 Espoo (FI); AMIN, Parth, St Albans, Hertfordshire AL1 5TS (GB)
(74) Representative: Zacco Sweden AB
(86) International application number: PCT/IB2016/050306
(87) International publication number: WO 2016/125038

(56) References cited:
- US-A1- 2013 155 930
- US-A1- 2014 219 149
- LIWEN CHU (STMICROELECTRONICS): "Enhanced power save for large BSS ; 11-12-0102-02-00ah-enhanced-power-save-for -large-bss", IEEE SA MENTOR; 11-12-0102-02-00AH-ENHANCED-POWER-SAVE-FOR -LARGE-BSS, IEEE-SA MENTOR, PISCATAWAY, NJ USA, vol. 802.11ah, no. 2, 19 January 2012 (2012-01-19), pages 1-9, XP068038194, [retrieved on 2012-01-19]

## Description

### TECHNICAL FIELD

The present disclosure relates, in general, to wireless communications, and, more particularly, to a traffic indication map association mechanism for low-energy devices.

### BACKGROUND

Wireless local area network (WLAN) systems based on IEEE 802.11, used for example in Industrial, Scientific and Medical (ISM) bands, access the wireless medium via contention based protocols complying with different regulatory domains. Some WLAN systems may be designed to support a large number of devices with low traffic profiles. An example of such a WLAN system is the IEEE 802.11ah Standard Draft (IEEE 802.11ah). A contention based protocol allows multiple devices to share the same spectrum by defining events that occur when two or more transmitters attempt to simultaneously access the same channel, and by establishing rules by which a transmitter provides reasonable opportunities for other transmitters to operate on the same channel. In IEEE 802.11, a radio capable device may be referred to as a wireless device or station (STA) and access point (AP).

Based on "IEEE 802.11ah: The Wi-Fi Approach for M2M Communications", the MAC Layer of IEEE 802.11 ah is designed to maximize the number of stations supported by the network while ensuring minimum energy consumption. IEEE 802.11ah defines two different types of stations: traffic indication map (TIM) stations and non-TIM stations, each with different procedures and time periods to access the common channel.

TIM stations need to listen to AP beacons to send or receive data within the associated TIM interval. Data transmissions of TIM stations may be performed within a restricted access window (RAW) period as well.

Non-TIM stations do not need to listen to any beacons to transmit data. During the association process, non-TIM devices directly negotiate with the AP to obtain a transmission time allocated in a periodic RAW (PRAW). The following transmissions can be either periodically defined or renegotiated, depending on the requirements set by the station.

Although non-TIM stations can transmit data periodically, it is advisable to deploy TIM stations for high-volume data applications to achieve better management of channel resources, and benefit from all the improvements developed by IEEE 802.11 ah, especially for those requiring high reachability. For instance, when a large group of devices are triggered simultaneously for data access, TIM deployment becomes essential.

US 2014/0219149 A1 discloses an access point including a type determiner to determine a type of each of a plurality of STAs and an association identification allocator to allocate association identifications to the plurality of STAs, respectively, based on the determined type such that association identifications corresponding to an identical type are clustered.

### SUMMARY

To address the foregoing problems with existing solutions, disclosed is a method in an access point. The method comprises determining an energy status of a wireless device, the energy status comprising one of a low-energy device and a high-energy device, and determining an access group of a plurality of access groups to which to allocate the wireless device. The method also comprises allocating the wireless device to a first access group upon determining that the wireless device is a low-energy device, the first access group for wireless devices that are to receive beacon information in a low-energy consumption format, and communicating the beacon information to the first access group in the low-energy consumption format.

In certain implementations, a low-energy device may include one or more of a battery-powered device that has a battery life below a battery life threshold, a device with a battery capacity below a battery capacity threshold, and a device that is not plugged in. The method may comprise receiving one of an indication of the energy status of the wireless device in a field of an association signaling message and an indication of the energy status of the wireless device using dedicated signaling. The dedicated signaling may be performed after the wireless device associates with the access point. The plurality of access groups may comprise at least one of traffic indication map groups, periodic restricted access window groups, and restricted access window groups. In certain embodiments, the first access group may be a first traffic indication map group, and the beacon information may comprise a delivery traffic indication map information element and a first traffic indication map information element used by the wireless device to send or receive data. The first traffic indication map information element may be associated with the first traffic indication map group. Determining the access group of a plurality access groups to which to allocate the wireless device may comprise determining whether a load of the first access group is below a load threshold.

In certain implementations, communicating the beacon information to the first traffic indication map group in the low-energy consumption may comprise communicating both a delivery traffic indication map information element and a first traffic indication map information element to the first traffic indication map group at the same time, the first traffic indication map information element contained within the delivery traffic indication map information element and associated with the first traffic indication map group. In certain embodiments, communicating the beacon information to the first traffic indication map group in the low-energy consumption format may comprise communicating both a delivery traffic indication map information element and a first traffic indication map information element to the first traffic indication map group within a defined time interval. The first traffic indication map information element may be associated with the first traffic indication map group, and the defined time interval may have a duration such that the wireless device allocated to the first traffic indication map group only wakes up once to receive both the delivery traffic indication map information element and the first traffic indication map information element.

Also disclosed is a method in a wireless device. The method comprises communicating an energy status of the wireless device to an access point, the energy status of the wireless device comprising one of a low-energy device and a high-energy device, the energy status for use in allocating the wireless device to an access group of a plurality of access groups, wherein wireless devices having a low-energy device energy status are allocated to a first access group of the plurality of access groups, the first access group for wireless devices that are to receive beacon information in a low-energy consumption format. The method further comprises receiving the beacon information in the low-energy consumption format when the wireless device is allocated to the first access group.

In certain implementations, a low-energy device may be one or more of a battery-powered device that has a battery life below a battery life threshold, a device with a battery capacity below a battery capacity threshold, and a device that is not plugged in. The method may comprise communicating an indication of the energy status of the wireless device in a field of an association signaling message. The method may comprise communicating an indication of the energy status of the wireless device using dedicated signaling. The dedicated signaling may be performed after the wireless device associates with the access point. The plurality of access groups may comprise at least one of traffic indication map groups, periodic restricted access window groups, and restricted access window groups. In certain embodiments, the first access group may be a first traffic indication map group, and the beacon information may comprise a delivery traffic indication map information element and a first traffic indication map information element used by the wireless device to send or receive data. The first traffic indication map information element may be associated with the first traffic indication map group.

In certain implementations, the method comprises receiving both a delivery traffic indication map information element and a first traffic indication map information element at the same time. The first traffic indication map information element may be contained in the delivery traffic indication map information element and associated with the first traffic indication map group. The method may comprise receiving both a delivery traffic indication map information element and a first traffic indication map information element within a defined time interval, the first traffic indication map information element associated with the first traffic indication map group. The defined time interval may have a duration such that the wireless device only wakes up once to receive both the delivery traffic indication map information element and the first traffic indication map information element. The defined time interval may be selected to prevent the wireless device from falling asleep between receiving the delivery traffic indication map information element and the first traffic indication map information element.

Certain implementations, of the present disclosure may provide one or more technical advantages. For example, some implementations may enable reduced energy consumption by low-energy devices by communicating beacon information in a low-energy consumption format. As another example, certain implementations may allow wireless devices to have a longer sleep time, potentially allowing the wireless devices to switch off more components, which may result in energy savings.

### BRIEF DESCRIPTION OF THE DRAWINGS

For a more complete understanding of the disclosed embodiments and their features and advantages, reference is now made to the following description, taken in conjunction with the accompanying drawings, in which:
FIGURE 1 illustrates a WLAN system having an access point and a plurality of stations, in accordance with certain implementations;
FIGURE 2 illustrates a comparison of energy consumption by devices allocated to TIM groups when each TIM group includes the same number of devices, in accordance with certain implementations;
FIGURE 3 illustrates a comparison of energy consumption by devices allocated to TIM groups, when each TIM group does not include the same number of devices, in accordance with certain implementations;
FIGURE 4 illustrates a flow diagram for a TIM prioritization method, in accordance with certain embodiments;
FIGURE 5A is a signal flow diagram illustrating signaling of a wireless device's TIM preference to an access point, in accordance with certain implementations;
FIGURE 5B is a signal flow diagram illustrating signaling of a wireless device's energy status to an access point;
FIGURE 6 illustrates a method in an access point, according to an embodiment;
FIGURE 7 illustrates a method in a wireless device, according to an embodiment;
FIGURE 8 is a block diagram illustrating a wireless device 110, according to certain implementations; and
FIGURE 9 is a block diagram illustrating a network node 120, according to certain implementations.

### DETAILED DESCRIPTION

As described above, certain wireless devices, such as TIM stations, may need to receive certain beacons in order to send or receive data. For a variety of reasons, certain TIM stations, such as low-energy devices, may benefit from receiving beacon information in a low-energy consumption format. The present disclosure contemplates various embodiments that may provide access mechanisms that may allow low-energy wireless devices, such as TIM stations, to receive beacon information in a low-energy consumption format.

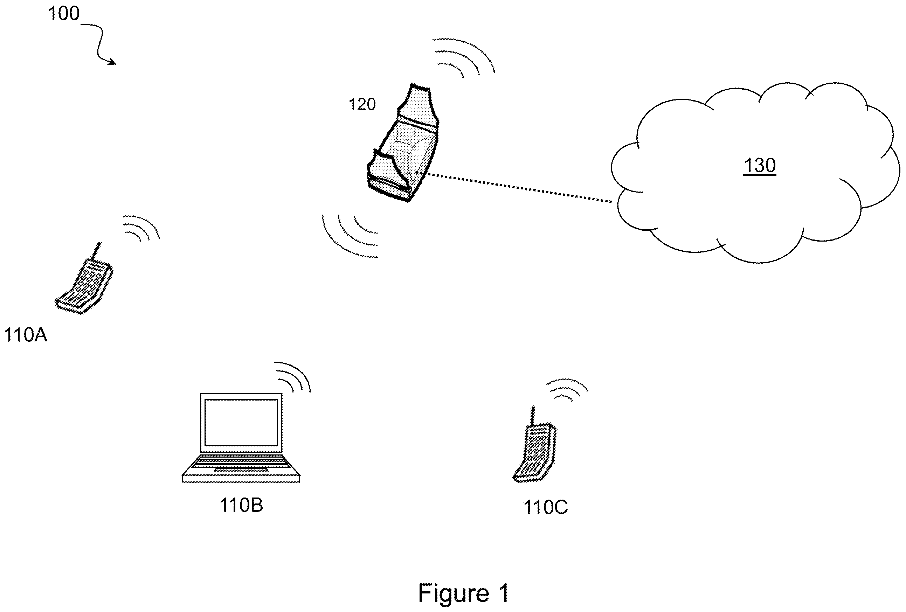

FIGURE 1 illustrates a wireless communications network 100, in accordance with certain embodiments. Network 100 includes a plurality of wireless devices 110A, 110B, 110C, network node 120, and other network 130. Wireless communications network 100 may operate based on any suitable radio access technology. For example, in certain embodiments network 100 may be a wireless local area network (WLAN) governed by IEEE 802.11 technology, such as IEEE 802.11 ah. Wireless communications network 100 may operate over any suitable range. For example, network 100 may have a fairly limited range, such as an office building or a building block.

Wireless devices 110 may also be referred to as stations (STA) or user equipment (UE). Wireless devices 110 may communicate with network node 120 over a wireless interface. For example, wireless devices 110 may transmit wireless signals to network node 120, and/or receive wireless signals from network node 120. The wireless signals may contain voice traffic, data traffic, control signals, and/or any other suitable information. Network 100 may include any suitable number of wireless devices 110.

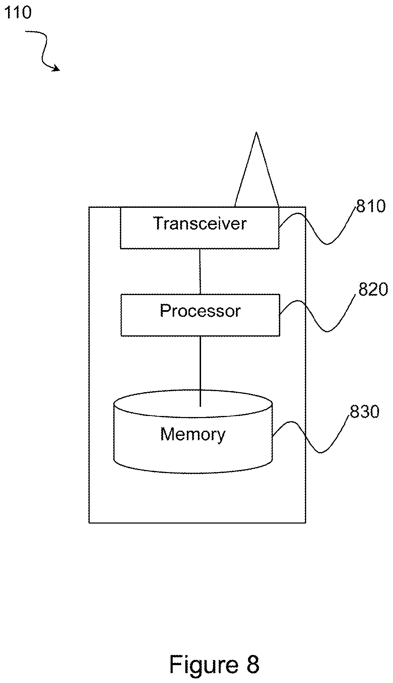

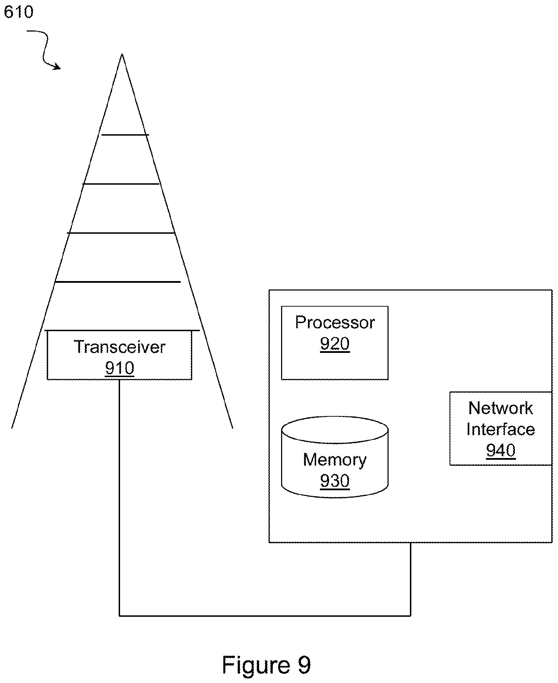

Network node 120 may also be referred to as access point (AP) 120. AP 120 is a network node that allows wireless devices, such as wireless devices 110A, 110B, and 110C to communicate wirelessly and to connect to another network 130. The other network 130 may be any suitable network, such as an organization's wired infrastructure or the Internet. AP 120 may have an associated coverage area. Wireless devices 110A-C located within a coverage area of AP 120 may be able to communicate with AP 120. Network 100 may include a plurality of APs 120. Example embodiments of wireless device 110 and access point 115 are described below with respect to FIGURES 8 and 9, respectively.

In certain embodiments, network 100 may be a WLAN operating according to IEEE 802.11ah. As described above, there are two types of stations in such a network: TIM stations and non-TIM stations. Wireless devices 110A, 110B, and 110C may be any suitable type of station. For example, wireless devices 110A-C may all be TIM stations, wireless devices 110A-C may all be non-TIM stations, or wireless devices 110A-C may be a mixture of TIM and non-TIM stations.

Each wireless device 110 of network 100 may have an energy status. The energy status of a wireless device may be one of low-energy device and high-energy device. Low-energy devices may be devices that suffer from one or more of high energy-consumption, limited battery lifetime, small battery capacity, and devices that are not connected to an energy source. For example, a device may be a low-energy device if it is a battery-powered device that does not have sufficient battery lifetime, or a device with a small battery capacity, or a device that is not plugged in. High-energy devices may be those devices that do not suffer from one or more of the above discussed characteristics of low-energy devices. For example, a device may be a high-energy device it is a battery-powered device that has a long battery lifetime, or a device with a large battery capacity, or a device that is plugged in.

When a TIM wireless device, such as wireless device 110A, attempts to associate with network 100, AP 120 may allocate wireless device 110A to one or more access groups. AP 120 may allocate wireless device 110A to any suitable type of access group, such as, for example, traffic indication map groups, periodic restricted access window groups, or restricted access window groups. To illustrate, AP 120 may allocate wireless device 110A to one or more TIM groups. TIM groups may define the time during which members of a particular TIM group may access network 100. For example, assume that network 100 has five TIM groups A-E, and five hundred wireless devices 110 associated with it. Assume further that each TIM group contains one hundred wireless devices. The one hundred wireless devices in TIM group A will access the network during a time period A, the one hundred wireless devices in TIM group B will access the network during time period B, and so on. For example, wireless devices 110A, 110B, and 110C may be allocated to TIM groups A, B, and C, respectively, and may each access the network at different times.

There may be any suitable number of TIM groups associated with AP 120, and each TIM group may include any suitable number of wireless devices 110. The number of wireless devices that may be included in a particular TIM group may have an upper limit. The upper limit may define a load threshold, above which the particular TIM group is unable to accommodate additional wireless devices without removing at least one wireless device from the overloaded TIM group.

As described above, TIM wireless devices in network 100 may need to receive beacon information in order to send or receive data. The beacon information may be sent by AP 120. The beacon information may include a delivery traffic indication map (DTIM) and a traffic indication map (TIM). DTIM allows TIM devices to get system information, including synchronization clock, time to receive group beacon, and any other suitable information. The DTIM beacon may be communicated first in time, and is required for all TIM groups associated with AP 120. There may, however, be a plurality of TIM beacons, each associated with a particular TIM group. Using the example of TIM groups A-E described above, AP 120 may communicate a first TIM beacon associated with TIM group A, a second TIM beacon associated with TIM group B, and so on. Thus, there may be a period of time between the point at which AP 120 communicates the DTIM beacon and the point at which AP 120 communicates a particular TIM beacon associated with a particular TIM group. As a result of this gap in time, wireless devices in the particular TIM group may fall asleep between receiving the DTIM beacon and the TIM beacon associated with the TIM group to which the wireless devices are allocated. Thus, wireless devices that fall asleep during this time period must wake up twice, once to receive the DTIM beacon and once to receive the TIM beacon associated with the particular TIM group to which the wireless device was allocated.

To illustrate, assume wireless devices 110A, 110B, and 110C of FIGURE 1 are all TIM stations. Wireless device 110A, 110B, and 110C may be allocated to TIM groups A, B, and C, respectively, by AP 120. AP 120 may communicate the DTIM first, followed by a first TIM beacon associated with TIM group A, a second TIM beacon associated with TIM group B, and a third TIM beacon associated with TIM group C, each communicated by AP 120 at a different time and within a different period of time after communicating the DTIM beacon. Thus, because of the gap in time between receipt of the DTIM beacon and the TIM beacons associated with TIM groups A, B, and C, wireless devices 110A, 110B, and 110C may have time to go to sleep between receiving the DTIM beacon and receiving the TIM beacon associated with their respective TIM groups. Thus, wireless devices 110A, 110B, and 110C will have to wake up twice: once to receive the DTIM beacon, and once to receive the TIM beacon associated with their respective TIM groups. This may result in increased energy consumption by wireless devices 110A-C, which may be undesirable, especially if one or more of wireless devices 110A-C are of the low-energy device energy status described above. Various embodiments of the present disclosure may provide improvements to the energy consumption of low-energy devices receiving DTIM and TIM beacons.

In certain embodiments, wireless device 110A may communicate an energy status of wireless device 110A to AP 120. AP 120 may determine the energy status of wireless device 110A. AP 120 may determine a TIM group of a plurality of TIM groups to which to allocate wireless device 110A. AP 120 may allocate wireless device 110A to a first TIM group upon determining that wireless device 110A is a low-energy device. The first TIM group may be for wireless devices that are to receive beacon information in a low-energy consumption format. AP 120 may communicate the beacon information to the first TIM group in the low-energy consumption format. Wireless device 110A may receive the beacon information in the low-energy format when wireless device 110A is allocated to the first TIM group.

AP 120 may determine the energy status of one or more wireless devices 110 in any suitable manner. For example, wireless device 110A may communicate to AP 120 that it is a low-energy device, and wireless device 110B may communicate to AP 120 that it is a high-energy device. In certain embodiments, the energy status of a wireless device may be communicated to AP 120 during the association procedure. As one example, wireless device 110A may indicate its energy status to AP 120 by adding a field or subfield in one of the association signaling messages. As another example, wireless device 110A may indicate its energy status using an existing field or subfield in one of the association signaling messages. In certain embodiments, the energy status of wireless device 110A may be communicated to AP 120 via dedicated signaling after association.

AP 120 may determine a TIM group to which to allocate wireless devices 110A and 110B, and allocate wireless devices 110A and 110B to the determined TIM groups. In certain embodiments, this determination may be based on any suitable characteristic. For example, AP 120 may determine a TIM group to which to allocate wireless devices 110A and 110B based on the energy status of wireless devices 110A and 110B. In certain embodiments, one or more TIM groups may be particularly suited for low-energy devices, and AP 120 may preferably allocate low-energy devices to the particular TIM group. For example, AP 120 may determine that wireless device 110A is a low-energy device, and may assign wireless device 110A to a first TIM group. Low-energy devices may be preferably allocated to the first TIM group because the first TIM group may be designated to communicate beacon information, such as the DTIM beacon and the TIM beacon associated with the first TIM group, in a low-energy consumption format. For comparison, AP 120 may determine that wireless device 110B is a high-energy device, and allocate wireless device 110B to a second TIM group that does not communicate beacon information in a low-energy consumption format.

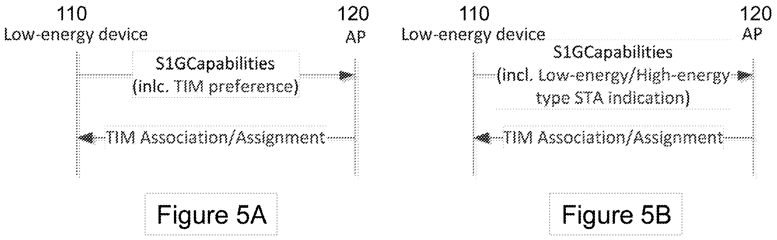

In certain embodiments, wireless device 110A may indicate a preferred TIM grouping to AP 120 using dedicated signaling. For example, wireless device 110 may use a dedicated subfield of the S1G Capabilities Info field in IEEE 802.11ah for indicating a preferred TIM grouping to AP 120. The ability of a wireless device to indicate a preferred TIM grouping is discussed in more detail in FIGURE 5A below.

As described above, AP 120 may allocate wireless device 110A to a first TIM group upon determining that wireless device 110A is a low-energy device, and may communicate the beacon information, including the DTIM beacon and the TIM beacon associated with the first TIM group, in a low-energy consumption format. The present disclosure contemplates that communicating beacon information in a low-energy format may be performed in any suitable manner.

For example, in certain embodiments AP 120 may communicate both the DTIM beacon and the TIM beacon associated with the first TIM group to the first TIM group at the same time. The TIM beacon associated with the first TIM group may be contained within the DTIM beacon, or may be transmitted with the DTIM beacon. Communicating the beacon information in this format may be advantageous to wireless device 110A because wireless device 110A is able to receive the beacon information at the same time, and therefore does not have to wake up twice.

To highlight the energy efficiency of such an approach, consider the case of wireless device 110B allocated to the second TIM group. Wireless device 110B may have to wake up to receive the DTIM beacon when it is communicated by AP 120, and then may have to wait to receive the TIM beacon associated with the second TIM group. During the time between receiving the DTIM beacon and the TIM beacon associated with the second TIM group, wireless device 110B may fall asleep, and thus will have to wake up a second time to receive the TIM beacon associated with the second TIM group. Receiving beacon information in this format, as compared to the low-energy consumption format of communication used with the first TIM group, requires wireless device 110B to consume more energy than wireless device 110A.

As another example, in certain embodiments AP 120 may communicate both the DTIM beacon and the TIM beacon associated with the first TIM group to the first TIM group within a defined time interval. The defined time interval may have a duration such that wireless device 110A allocated to the first TIM group only wakes up once to receive both the DTIM beacon and the TIM beacon associated with the first TIM group. Put another way, the defined time interval may be selected to prevent wireless device 110A from falling asleep between communication of both the DTIM beacon and the TIM beacon associated with the first TIM group. The energy savings that result from such an approach are similar to those described above. Assuming that wireless device 110B is assigned to a second TIM group to which beacon information is not communicated in a low-energy format, wireless device 110B may have to wake up twice to receive the beacon information. Wireless device 110A, however, will only have to wake up once, and therefore will consume less energy than wireless device 110B.

As described above, low-energy devices, such as wireless device 110A, may be allocated to a first TIM group to which beacon information is communicated in a low-energy format, and high-energy devices, such as wireless device 110B may be allocated to a second TIM group or other TIM group that does not communicate beacon information in a low-energy format. In certain embodiments, however, high-energy device 110B may be allocated to the first TIM group along with low-energy device 110B. High-energy devices allocated to the first TIM group, and therefore receiving beacon information in a low-energy consumption format, may subsequently be reallocated to a TIM group that does not communicate beacon information in a low-energy consumption format.

As described above, AP 120 may determine the TIM group to which to allocate a wireless device based on any suitable characteristic, such as energy status. In certain embodiments, AP 120 may also take into account the load of a particular TIM group in determining the TIM group to which to allocate a wireless device, and in allocating the wireless device to a TIM group. The load may be determined in any suitable manner. For example, AP 120 may be able to obtain load information by measuring flow in the network. The load of a particular TIM group may be measured based on how many packets arrive, or based on the number of packets or bytes per device multiplied by the number of devices in the particular TIM group.

For example, assume that AP 120 has allocated wireless device 110A, a low-energy device, and wireless device 110B, a high-energy device, to the first TIM group. Assume further that wireless device 110C, a low-energy device, attempts to associate with AP 120. AP 120, in determining the TIM group to which to allocate wireless device 110C, AP 120 may consider the load in the first TIM group. For example, AP 120 may consider whether the load of the first TIM group is below a load threshold. The load threshold may be the max number of wireless devices that the first TIM group is able to accommodate. If the load of the first TIM group is below the load threshold, then AP 120 may allocate wireless device 110C to the first TIM group. AP 120 may allocate wireless device 110C to the first TIM group based at least in part on its energy status. If the load of the first TIM group is equal to the load threshold, AP 120 may allocate wireless device 110C to the second TIM group or another TIM group, even though wireless device 110C is a low-energy device, and would therefore benefit from the low-energy consumption communication format of the first TIM group. Alternatively, if the load of the first TIM Group is equal to the load threshold, AP 120 may simultaneously reallocate wireless device 110B, a high-energy device, to another TIM group, and allocate wireless device 110C to the first TIM group. Thus, wireless device 110C may receive beacon information in a low-energy consumption format, which may be beneficial because of its low-energy device energy status.

In certain embodiments, there may be subgroups within the one or more TIM groups. For example, Restricted Access Window (RAW), page and page slicing subgroups may exist within a TIM group. Thus, in addition allocating a wireless device to a TIM group, AP 120 may further allocate the wireless device to a subgroup within the TIM group. Furthermore, in addition to taking into account the load of a TIM group in determining and allocating a wireless device to a TIM group, as described above, AP 120 may also take into account the load of a TIM subgroup.

Although the various embodiments may be described in the context allocating a TIM station to one of a plurality of TIM groups, this is for purposes of example only and is not intended to limit the scope of the disclosure. The present disclosure contemplates that the various embodiments may be applied to a variety of scenarios.

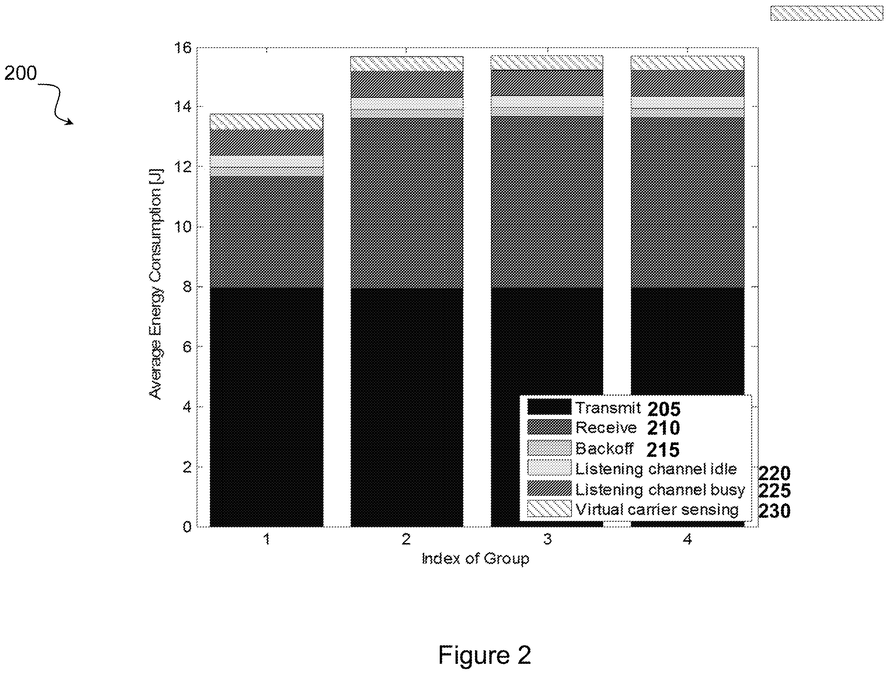

FIGURE 2 illustrates the energy savings that may be achieved when the same number of devices are allocated to each TIM group, in accordance with certain embodiments. More particularly, FIGURE 2 depicts the energy consumption for each of four TIM groups (1-4) over the course of a simulation. Average energy consumption of each TIM group was measured for transmit 205, receive 210, backoff 215, listening channel idle 220, listening channel busy 225, and virtual carrier sensing 230. The simulation assumes an hour of data communication between forty Non-AP devices, such as wireless devices 110A-C described above, and an AP, such as AP 120 described above. Packet arrival in each station follows Poisson Process, and has an average inter-arrival time of one second. Uplink is of the main interest. Each TIM group includes the same number of wireless devices, i.e., ten wireless devices per TIM group.

As shown in FIGURE 2, the first TIM group (TIM group 1) consumes much less energy in receiving 210 than other TIM groups, while energy consumption in other states (transmit 205, back-off 215, listening channel idle 220, listening channel busy 225, and virtual carrier sensing 230) remains the same for all the groups.

As described above, TIM devices receive three kinds of information in total. Firstly, all TIM stations have to wake up to receive DTIM beacon. The DTIM beacon provides system information, including synchronization clock, time to receive group beacon, and other suitable information. Secondly, TIM devices have to wake up to receive their group TIM beacon. Lastly, after a device transmit its packet, it needs to receive ACK from AP to know whether the transmission is successful or not. Low-energy devices may benefit from placement in a TIM group to which beacon information is communicated in a low-energy consumption format.

As described above, in certain embodiments, the DTIM beacon may already contain the TIM beacon information for the first TIM group, the first TIM group devices only need to wake up once to receive the DTIM beacon and the TIM beacon associated with the first TIM group. Devices in the other TIM groups (groups 2-4) have to wake up twice to receive the DTIM beacon and TIM beacon each time. Thus, the first TIM group consumes less power because they receive the TIM beacon information for the first TIM group with the DTIM, and therefore spend less time on receiving and have more time to sleep. Overall, energy consumption was 13% for the first TIM group devices as compared to TIM groups 2-4.

Furthermore, since the data traffic model and number of devices for each group are the same, each group will transmit almost the same number of packets, and experience the same collision probability and retransmission. Thus, it is not surprising that they consume expectedly the same energy in transmitting 205, back-off 215, and listening channel idle 220.

In certain embodiments, the DTIM beacon may not include the TIM beacon for the first TIM group, but the DTIM beacon and the TIM beacon for the first TIM group may be consecutively broadcast by the AP. In such an embodiment, the wireless device could get a similar energy saving benefit from the wake up procedures, as it does not have to wake up for the DTIM and TIM beacons separately. This way, the wireless device may have a longer sleep time, and also may potentially switch off more components, potentially resulting in energy savings.

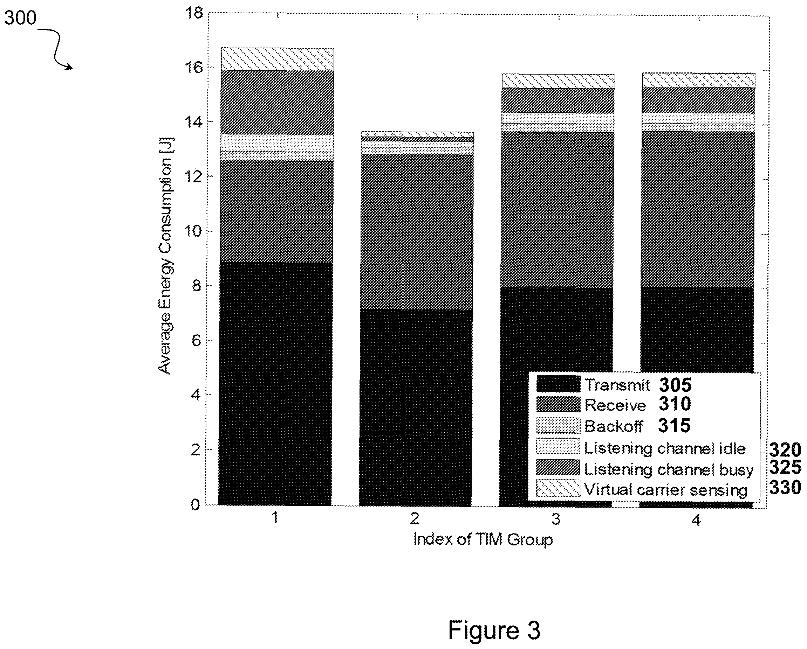

FIGURE 3 illustrates the energy savings that may be achieved when each of the TIM groups do not have the same number of devices, in accordance with certain embodiments. More particularly, FIGURE 3 depicts the energy consumption for each of four TIM groups (1-4) over the course of a simulation. Average energy consumption of each TIM group was measured for transmit 305, receive 310, backoff 315, listening channel idle 320, listening channel busy 325, and virtual carrier sensing 330. The simulation assumes an hour of data communication between forty Non-AP devices, such as wireless devices 110A-C described above, and an AP, such as AP 120 described above. Packet arrival in each station follows Poisson Process, and has an average inter-arrival time of one second. Uplink is of the main interest. Unlike FIGURE 2 described above, the TIM groups do not include the same number of wireless devices. The first TIM group (TIM group 1) contains 15 wireless devices, the second TIM group (TIM group 2) contains 5 devices, and TIM groups 3 and 4 contain 10 devices.

In the scenario illustrated in FIGURE 3, the first TIM group, which contains the most wireless devices, consumes more energy on transmit 305, back-off 315, listening channel idle 320, listening channel busy 325, and virtual carrier sensing 330 since they have transmitted more packets under a higher collision probability channel with more retransmission. The first TIM group, however, still consumes much less energy on receiving 310, even though its consumption in transmit and idle is significantly larger than the second TIM group. Thus, it can be concluded that receiving the TIM beacon in a manner that causes the wireless device to have to wake up twice may cost a large amount of energy in the TIM groups other than the first one (independently from the number of devices). On the other hand, the impact of device distribution among TIM groups should not be neglected, as the energy consumption figures largely depend on the number of devices, even for the first TIM group.

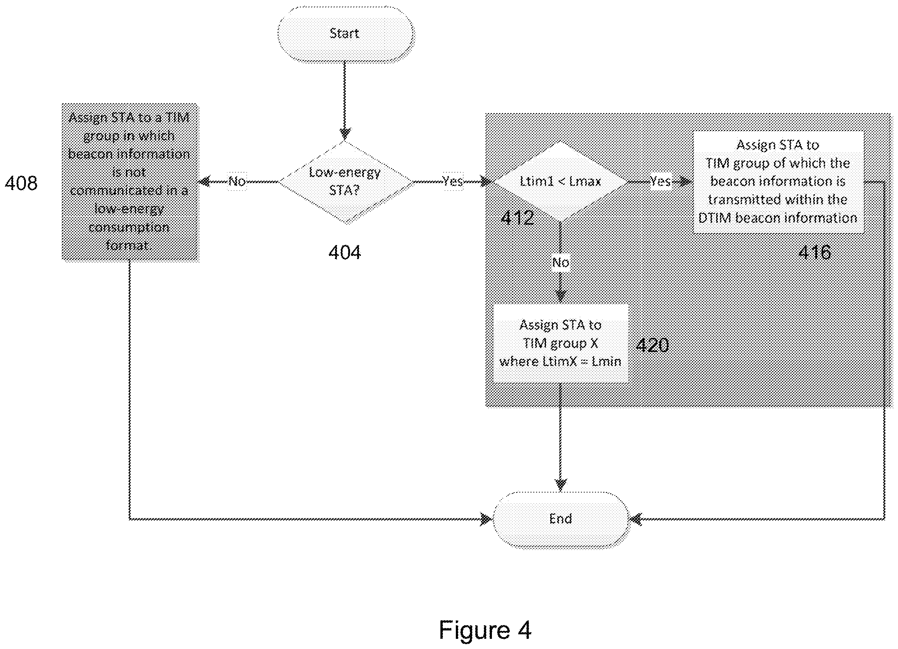

FIGURE 4 illustrates a flow diagram for a TIM prioritization method, in accordance with certain embodiments. The flow diagram begins at decision point 404, when the AP, such as AP 120 described above, determines whether a wireless device requesting access to the network is a low-energy device. If the AP determines that the wireless device is not a low-energy device, then the method proceeds to step 408. At step 408, the AP assigns the wireless device to a TIM group in which beacon information is not communicated in a low-energy consumption format.

If the AP determines that the wireless device is a low-energy device, then the method proceeds to step 412. At step 412, the AP determines whether the load in the TIM group of which the beacon information is communicated in a low-energy consumption format (i.e., TIM beacon transmitted within the DTIM beacon information, or together with the DTIM beacon information, or within a minimal time difference to the DTIM beacon information) exceeds a load threshold (Lmax). If the load of the first TIM group (Ltim1) is below a parameter (e.g., Lmax), the method proceeds to step 416 and the AP allocates the new wireless device to the first TIM group to which TIM beacon information may be transmitted within the DTIM beacon information. Lmax may refer to the maximal load that can be allocated in the first TIM group. The Lmax parameter may be set as an absolute or relative value. For example, Lmax may be set with respect to the load in other TIM groups or non-TIM groups. If, at step 412, the AP determines that the load of the first TIM group is equal or above Lmax, the method proceeds to step 420, and the AP may assign the device to a TIM group or non-TIM group other than the first TIM group. In certain embodiments, this may be a TIM or non-TIM group that has the lowest load (i.e., the lowest traffic (Lmin)).

In certain embodiments, the new wireless device requesting access to the system may be allocated into one or more subgroups of a TIM group, such as a page subgroup or page slice subgroup. The AP may also take into account the load of the various subgroups in allocating the wireless device to a TIM group. For example, subgroups within non-TIM groups, namely PRAW, may also be considered while calculating Lmax. Thus, Lmax may be defined as an absolute or relative value (with respect to the load in other TIM groups or RAW groups within TIM groups or page within TIM groups or page slicing within TIM groups or non-TIM groups or PRAW groups within non-TIM groups).

FIGURE 5A is a signal flow diagram illustrating signaling of a wireless device 110's TIM preference to an access point 120, in accordance with certain embodiments. As described above, a wireless device 110 may be a low-energy device. Wireless device 110 may indicate a preferred TIM grouping to AP 120 using dedicated signaling. For example, and as illustrated in FIGURE 5A, in certain embodiments, wireless device 110 may use a dedicated subfield of the S1G Capabilities Info field in IEEE 802.11ah for indicating a TIM preference to AP 120. In response to the TIM preference communicated by wireless device 110, AP 120 may communicate a TIM Association/Assignment.

FIGURE 5B is a signal flow diagram illustrating signaling of a wireless device 110's energy status to an access point 120. As described above, wireless device 110 may communicate its energy status to AP 120. For example, wireless device 110 may communicate its energy status during the association procedure. This may occur in any suitable manner. In the example illustrated in FIGURE 5B, wireless device 110 may indicate its energy status to AP 120 by including a low-energy device or high-energy device indication in S1G Capabilities information. In certain embodiments, wireless device 110 may indicate its energy status to AP 120 by adding a field or subfield in one of the association signaling messages. As another example, wireless device 110 may indicate its energy status using an existing field or subfield in one of the association signaling messages. In certain embodiments, the energy status of wireless device 110 may be communicated to AP 120 via dedicated signaling after association. In response to wireless device 110's indication of energy status, AP 120 may respond with a TIM association/assignment.

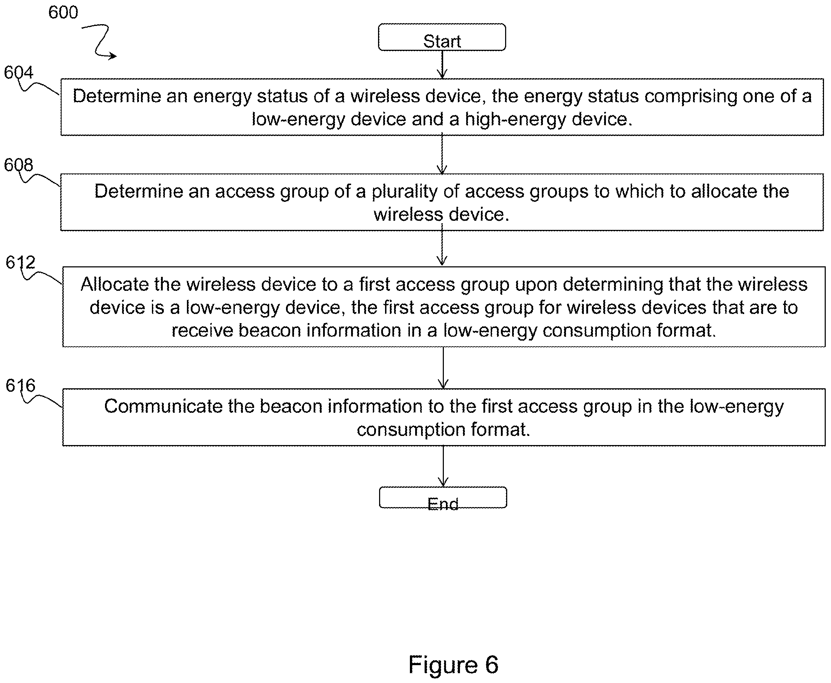

FIGURE 6 illustrates a method in an access point, according to an embodiment. The method begins at step 604, when an energy status of a wireless device is determined. The energy status may include one of a low-energy device and a high-energy device. In certain embodiments, the access point may receive one of an indication of the energy status of the wireless device in a field of an association signaling message and an indication of the energy status of the wireless device using dedicated signaling. The dedicated signaling may be performed after the wireless device associates with the access point. A low-energy device may be one or more of a battery-powered device that has a battery life below a battery life threshold, a device with a battery capacity below a battery capacity threshold, and a device that is not plugged in.

At step 608, the access point determines an access group of a plurality of access groups to which to allocate the wireless device. In certain embodiments, the access point may determine whether a load of the first access group is below a load threshold. The plurality of access groups may comprise at least one of traffic indication map groups, periodic restricted access window groups, and restricted access window groups.

At step 612, the access point allocates the wireless device to a first access group upon determining that the wireless device is a low-energy device. The first access group is for wireless devices that are to receive beacon information in a low-energy consumption format. In certain embodiments, the first access group may be a first traffic indication map group, and the beacon information may include a delivery traffic indication map information element and a first traffic indication map information element used by the wireless device to send or receive data. The first traffic indication map information element may be associated with the first traffic indication map group.

At step 616, the access point communicates the beacon information to the first access group in the low-energy consumption format. In certain embodiments, the access point communicates both a delivery traffic indication map information element and a first traffic indication map information element to the first traffic indication map group at the same time. The first traffic indication map information element may be contained within the delivery traffic indication map information element and associated with the first traffic indication map group. In certain embodiments, the access point may communicate both a delivery traffic indication map information element and a first traffic indication map information element to the first traffic indication map group within a defined time interval. The first traffic indication map information element may be associated with the first traffic indication map group, and the defined time interval may have a duration such that the wireless device allocated to the first traffic indication map group only wakes up once to receive both the delivery traffic indication map information element and the first traffic indication map information element. The defined time interval may be selected to prevent the wireless device from falling asleep between communication of both the delivery traffic indication map information element and the first traffic indication map information element to the first traffic indication map group.

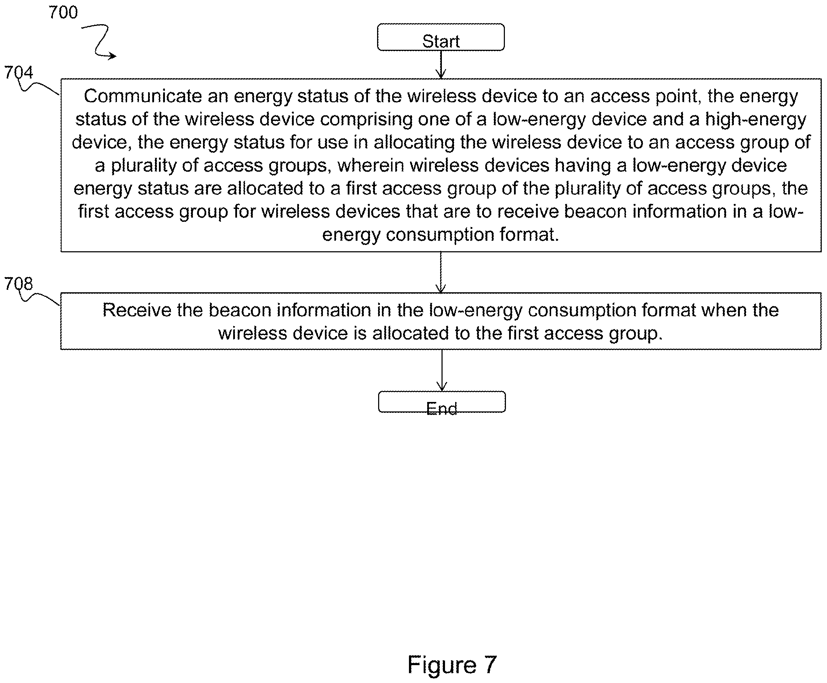

FIGURE 7 illustrates a method in a wireless device, according to an embodiment. The method begins at step 704 when the wireless device communicates an energy status of the wireless device to an access point. The energy status of the wireless device is one of a low-energy device and a high-energy device, and may be used in allocating the wireless device to an access group of a plurality of access groups. Wireless devices having a low-energy device energy status are allocated to a first access group of the plurality of access groups, and the first access group is for wireless devices that are to receive beacon information in a low-energy consumption format. The wireless device may communicate an energy status of the wireless device in any suitable manner. For example, the wireless device may communicate an indication of the energy status of the wireless device in a field of an association signaling message. As another example, the wireless device may communicate an indication of the energy status of the wireless device using dedicated signaling. The dedicated signaling may be performed after the wireless device associates with the access point. In certain embodiments, a low-energy device is one or more of a battery-powered device that has a battery life below a battery life threshold, a device with a battery capacity below a battery capacity threshold, and a device that is not plugged in.

At step 708, the wireless device receives the beacon information in the low-energy consumption format when the wireless device is allocated to the first access group. The plurality of access groups may comprise at least one of traffic indication map groups, periodic restricted access window groups, and restricted access window groups. In certain embodiments, the first access group may be a first traffic indication map group, and the beacon information may comprise a delivery traffic indication map information element and a first traffic indication map information element used by the wireless device to send or receive data. The first traffic indication map information element may be associated with the first traffic indication map group.

In certain embodiments, the wireless device may receive both a delivery traffic indication map information element and a first traffic indication map information element at the same time. The first traffic indication map information element may be contained in the delivery traffic indication map information element and associated with the first traffic indication map group. In certain embodiments, the wireless device receives both a delivery traffic indication map information element and a first traffic indication map information element within a defined time interval. The first traffic indication map information element may be associated with the first traffic indication map group, and the defined time interval may have a duration such that the wireless device only wakes up once to receive both the delivery traffic indication map information element and the first traffic indication map information element. The defined time interval may be selected to prevent the wireless device from falling asleep between receiving the delivery traffic indication map information element and the first traffic indication map information element.

FIGURE 8 is a block diagram illustrating a wireless device 110, according to certain implementations. Examples of wireless device 110 include a mobile phone, a smart phone, a PDA (Personal Digital Assistant), a portable computer (e.g., laptop, tablet), a sensor, a modem, a machine type (MTC) device / machine to machine (M2M) device, laptop embedded equipment (LEE), laptop mounted equipment (LME), USB dongles, other wireless device capable of D2D operation, or other device that can provide wireless communication. Wireless device 110 may also be referred to as a user equipment, a station, or a terminal in some implementations. Wireless device 110 includes transceiver 810, processor 820, and memory 830. In some implementations, transceiver 810 facilitates transmitting wireless signals to and receiving wireless signals from an access node (e.g., via an antenna), processor 820 executes instructions to provide some or all of the functionality described above as being provided by wireless devices, and memory 830 stores the instructions executed by processor 820.

Processor 820 may include any suitable combination of hardware and software implemented in one or more modules to execute instructions and manipulate data to perform some or all of the described functions of wireless device 110. In some implementations, processor 820 may include, for example, one or more computers, one or more central processing units (CPUs), one or more microprocessors, one or more applications, and/or other logic. Processor 820 may include analog and/or digital circuitry configured to perform some or all of the described functions of mobile device 110. For example, processor 820 may include resistors, capacitors, inductors, transistors, diodes, and/or any other suitable circuit components.

Memory 830 is generally operable to store instructions, such as a computer program, software, an application including one or more of logic, rules, algorithms, code, tables, etc. and/or other instructions capable of being executed by a processor. Examples of memory 830 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

Other implementations of wireless device 110 may include additional components beyond those shown in FIGURE 8 that may be responsible for providing certain aspects of the wireless device's functionality, including any of the stronger interferer detection functionality described above and/or any additional functionality (including any functionality necessary to support the solution described above).

In certain implementations, wireless device 110 may include one or more modules. For example, wireless device 110 may include a determining module, a communication module, a receiver module, an input module, a display module, and any other suitable modules. The determining module may perform the processing functions of wireless device 110. For example, the determining module may determine an energy status for the wireless device. The determining module may include or be included in processor 820. The determining module may include analog and/or digital circuitry configured to perform any of the functions of the determining module and/or processor 820. The functions of the determining module described above may, in certain embodiments, be performed in one or more distinct modules.

The communication module may perform the transmission functions of wireless device 110. The communication module may transmit messages to one or more access points 120 of network 100. For example, the communication module may communicate an energy status of the wireless device to an access point. The communication module may include a transmitter and/or a transceiver, such as transceiver 810. The communication module may include circuitry configured to wirelessly transmit messages and/or signals. In particular embodiments, the communication module may receive messages and/or signals for transmission from the determining module.

The receiving module may perform the receiving functions of wireless device 110. For example, the receiving module may receive beacon information in a low-energy consumption format. The receiving module may include a receiver and/or a transceiver. The receiving module may include circuitry configured to wirelessly receive messages and/or signals. In particular embodiments, the receiving module may communicate received messages and/or signals to the determining module.

The input module may receive user input intended for wireless device 110. For example, the input module may receive key presses, button presses, touches, swipes, audio signals, video signals, and/or any other appropriate signals. The input module may include one or more keys, buttons, levers, switches, touchscreens, microphones, and/or cameras. The input module may communicate received signals to the determining module.

The display module may present signals on a display of wireless device 110. The display module may include the display and/or any appropriate circuitry and hardware configured to present signals on the display. The display module may receive signals to present on the display from the determining module.

FIGURE 9 is a block diagram illustrating a network node 120, according to certain implementations. Examples of network node 120 include a wireless access point (e.g., a Wi-Fi access point, such as access point 120 described above), eNodeB, a node B, a base station, a low power node, a base station controller, a radio network controller, a relay, a donor node controlling relay, a base transceiver station (BTS), transmission points, transmission nodes, RRU, RRH, nodes in a distributed antenna system (DAS), a core network node, an MME, etc. Network node 120 may include one or more of transceiver 910, processor 920, memory 930, and network interface 940. In some implementations transceiver 910 facilitates transmitting wireless signals to and receiving wireless signals from a wireless device (e.g., via an antenna), processor 920 executes instructions to provide some or all of the functionality described above as being provided by an access node, memory 930 stores the instructions executed by processor 920, and network interface 940 communicates signals to backend network components, such as a gateway, switch, router, Internet, Public Switched Telephone Network (PSTN), etc.

Processor 920 may include any suitable combination of hardware and software implemented in one or more modules to execute instructions and manipulate data to perform some or all of the described functions of network node 120. In some embodiments, processor 920 may include, for example, one or more computers, one or more central processing units (CPUs), one or more microprocessors, one or more applications, and/or other logic.

Memory 930 is generally operable to store instructions, such as a computer program, software, an application including one or more of logic, rules, algorithms, code, tables, etc. and/or other instructions capable of being executed by a processor. Examples of memory 930 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some implementations, network interface 940 is communicatively coupled to processor 920 and may refer to any suitable device operable to receive input for network node 120, send output from network node 120, perform suitable processing of the input or output or both, communicate to other devices, or any combination of the preceding. Network interface 940 may include appropriate hardware (e.g., port, modem, network interface card, etc.) and software, including protocol conversion and data processing capabilities, to communicate through a network.

In certain implementations, network node 120 may include a determining module, an access group allocation module, a communication module, a receiving module, and any other suitable modules. In some embodiments, one or more of the determining module, the access group allocation module, the communication module, the receiving module, and any other suitable modules may be implemented using one or more processors 920 of FIGURE 9.

In general, the determining module may perform the processing function of network node 120. For example, the determining module may determine an energy status of a wireless device. As another example, the determining module may determine an access group of a plurality of access groups to which to allocate the wireless device. As yet another example, the determining module may determine whether a load of the first access group is below a load threshold. In general, the access group allocation module may allocate a wireless device to a first access group upon determining that the wireless device is a low-energy device. In certain embodiments, the determining module and the access group allocation module may be combined into a single module.

The communication module may perform the transmission functions of network node 120. The communication module may transmit messages to one or more of wireless devices 110 or to other network nodes. For example, the communication module may communicate beacon information to the first access group in the low energy consumption format. The communication module may include a transmitter and/or a transceiver, such as transceiver 1210. The communication module may include circuitry configured to wirelessly transmit messages and/or signals. In particular embodiments, the communication module may receive messages and/or signals for transmission from the determining module or the access group allocation module.

The receiving module may perform the receiving functions of network node 120. The receiving module may receive any suitable information from a wireless device or other network node. For example, the receiving module may receive a message including information about the energy status of the wireless device. The receiving module may include a receiver and/or a transceiver. The receiving module may include circuitry configured to wirelessly receive messages and/or signals. In particular embodiments, the receiving module may communicate received messages and/or signals to the determining module.

Other implementations of network node 120 may include additional components beyond those shown in FIGURE 9 that may be responsible for providing certain aspects of the network node's functionality, including any of the interferer detection functionality described above and/or any additional functionality (including any functionality necessary to support the solution described above). The various different types of network nodes may include components having the same physical hardware but configured (e.g., via programming) to support different radio access technologies, or may represent partly or entirely different physical components.

Modifications, additions, or omissions may be made to the systems and apparatuses disclosed herein without departing from the scope of the disclosure. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods disclosed herein without departing from the scope of the disclosure. The methods may include more, fewer, or other steps. Additionally, steps may be performed in any suitable order.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of this disclosure, as defined by the following claims.

Abbreviations used in the preceding description include:
- STA: Station
- AP: Access Point
- DL: Downlink
- DTIM: Delivery Traffic Indication Map
- STA: Station
- TIM: Traffic Indication Map
- UL: Uplink
- WLAN: Wireless Local Area Network

## Claims

1. A method (600) in an access point (120), comprising:
determining (604) an energy status of a wireless device (110), the energy status comprising one of a low-energy device and a high-energy device;
determining (608) an access group of a plurality of access groups to which to allocate the wireless device (110), wherein determining the access group comprises determining whether a load of a first access group is below a load threshold;
allocating (612) the wireless device (110) to the first access group upon determining that the wireless device (110) is a low-energy device and that the load of the first access group is below the load threshold, the first access group for wireless devices that are to receive beacon information in a low-energy consumption format;
allocating the wireless device (110) to a second access group other than the first access group upon determining that the wireless device (110) is a low-energy device and that the load of the first access group is not below the load threshold; and
communicating (616) the beacon information to the first access group in the low-energy consumption format.

2. The method of Claim 1, wherein the plurality of access groups comprises at least one of traffic indication map groups, periodic restricted access window groups, and restricted access window groups.

3. The method of Claim 1, wherein the first access group is a first traffic indication map group, and the beacon information comprises a delivery traffic indication map information element and a first traffic indication map information element used by the wireless device to send or receive data, the first traffic indication map information element associated with the first traffic indication map group.

4. The method of Claim 3, wherein communicating the beacon information to the first traffic indication map group in the low-energy consumption format comprises:
communicating both a delivery traffic indication map information element and a first traffic indication map information element to the first traffic indication map group at the same time, the first traffic indication map information element contained within the delivery traffic indication map information element and associated with the first traffic indication map group.

5. The method of Claim 3, wherein communicating the beacon information to the first traffic indication map group in the low-energy consumption format comprises:
communicating both a delivery traffic indication map information element and a first traffic indication map information element to the first traffic indication map group within a defined time interval, the first traffic indication map information element associated with the first traffic indication map group, and the defined time interval having a duration such that the wireless device allocated to the first traffic indication map group only wakes up once to receive both the delivery traffic indication map information element and the first traffic indication map information element.

6. The method of Claim 1, further comprising receiving one of:
an indication of the energy status of the wireless device (110) in a field of an association signaling message; and
an indication of the energy status of the wireless device (110) using dedicated signaling, the dedicated signaling performed after the wireless device (110) associates with the access point (120).

7. The method of any of claims 1 through 6, wherein the second access group has a lowest load among the plurality of access groups.

8. The method of Claim 1, wherein a low-energy device comprises one or more of:
a battery-powered device that has a battery life below a battery life threshold;
a device with a battery capacity below a battery capacity threshold; and
a device that is not plugged in.

9. An access point (120), comprising:
one or more processors (920) configured to:
determine an energy status of a wireless device (110), the energy status comprising one of a low-energy device and a high-energy device;
determine an access group of a plurality of access groups to which to allocate the wireless device (110), the one or more processors being configured to determine whether a load of a first access group is below a load threshold;
allocate the wireless device (110) to the first access group upon determining that the wireless device (110) is a low-energy device and that the load of the first access group is below the load threshold, the first access group for wireless devices that are to receive beacon information in a low-energy consumption format;
allocate the wireless device (110) to a second access group other than the first access group upon determining that the wireless device (110) is a low-energy device and that the load of the first access group is not below the load threshold; and
communicate the beacon information to the first access group in the low-energy consumption format.

10. The access point of Claim 9, wherein the plurality of access groups comprises at least one of traffic indication map groups, periodic restricted access window groups, and restricted access window groups.

11. The access point of Claim 9, wherein the first access group is a first traffic indication map group, and the beacon information comprises a delivery traffic indication map information element and a first traffic indication map information element used by the wireless device (110) to send or receive data, the first traffic indication map information element associated with the first traffic indication map group.

12. The access point of Claim 11, wherein the one or more processors (920) configured to communicate the beacon information to the first traffic indication map group in the low-energy consumption format comprises one or more processors (920) configured to communicate both a delivery traffic indication map information element and a first traffic indication map information element to the first traffic indication map group at the same time, the first traffic indication map information element contained within the delivery traffic indication map information element and associated with the first traffic indication map group.

13. The access point of Claim 11, wherein the one or more processors (920) configured to communicate the beacon information to the first traffic indication map group in the low-energy consumption format comprises one or more processors (920) configured to communicate both a delivery traffic indication map information element and a first traffic indication map information element to the first traffic indication map group within a defined time interval, the first traffic indication map information element associated with the first traffic indication map group, and the defined time interval having a duration such that the wireless device allocated to the first traffic indication map group only wakes up once to receive both the delivery traffic indication map information element and the first traffic indication map information element.

14. The access point of Claim 9, wherein the one or more processors (920) are further configured to receive one of:
an indication of the energy status of the wireless device (110) in a field of an association signaling message; and
an indication of the energy status of the wireless device (110) using dedicated signaling, the dedicated signaling performed after the wireless device (110) associates with the access point (120).

15. The access point of Claim 9, wherein a low-energy device comprises one or more of:
a battery-powered device that has a battery life below a battery life threshold;
a device with a battery capacity below a battery capacity threshold; and
a device that is not plugged in.

## Patentansprüche

1. Verfahren (600) in einem Zugangspunkt (120), umfassend:
Bestimmen (604) eines Energiestatus einer drahtlosen Vorrichtung (110), wobei der Energiestatus eine von einer Vorrichtung mit niedriger Energie und einer Vorrichtung mit hoher Energie umfasst;
Bestimmen (608) einer Zugangsgruppe von einer Vielzahl von Zugangsgruppen, der die drahtlose Vorrichtung (110) zuzuweisen ist, wobei das Bestimmen der Zugangsgruppe das Bestimmen umfasst, ob eine Last einer ersten Zugangsgruppe unter einem Lastschwellenwert liegt;
Zuweisen (612) der drahtlosen Vorrichtung (110) zu der ersten Zugangsgruppe bei der Bestimmung, dass die drahtlose Vorrichtung (110) eine Vorrichtung mit niedriger Energie ist und dass die Last der ersten Zugangsgruppe unter dem Lastschwellenwert liegt, wobei die erste Zugangsgruppe für drahtlose Vorrichtungen vorgesehen ist, die Bakeninformation in einem Format mit niedrigem Energieverbrauch empfangen soll;
Zuweisen der drahtlosen Vorrichtung (110) zu einer zweiten Zugangsgruppe, die sich von der ersten Zugangsgruppe unterscheidet, bei der Bestimmung, dass die drahtlose Vorrichtung (110) eine Vorrichtung mit niedriger Energie ist und dass die Last der ersten Zugangsgruppe nicht unter dem Lastschwellenwert liegt; und
Kommunizieren (616) der Bakeninformation an die erste Zugangsgruppe in dem Format mit niedrigem Energieverbrauch.

2. Verfahren nach Anspruch 1, wobei die Vielzahl von Zugangsgruppen mindestens eines von Verkehrsanzeigekartengruppen, periodisch eingeschränkten Zugangsfenstergruppen und eingeschränkten Zugangsfenstergruppen umfasst.

3. Verfahren nach Anspruch 1, wobei die erste Zugangsgruppe eine erste Verkehrsanzeigekartengruppe ist und die Bakeninformation ein Lieferverkehrsanzeigekarten-Informationselement und ein erstes Verkehrsanzeigekarten-Informationselement umfasst, das von der drahtlosen Vorrichtung verwendet wird, um Daten zu senden oder zu empfangen, wobei das erste Verkehrsanzeigekarten-Informationselement der ersten Verkehrsanzeigekartengruppe zugeordnet ist.

4. Verfahren nach Anspruch 3, wobei das Kommunizieren der Bakeninformation an die erste Verkehrsanzeigekartengruppe in dem Format mit niedrigem Energieverbrauch umfasst:
Kommunizieren von sowohl einem Lieferverkehrsanzeigekarten-Informationselement als auch einem ersten Verkehrsanzeigekarten-Informationselement an die erste Verkehrsanzeigekartengruppe zur gleichen Zeit, wobei das erste Verkehrsanzeigekarten-Informationselement in dem Lieferverkehrsanzeigekarten-Informationselement enthalten ist und der ersten Verkehrsanzeigekartengruppe zugeordnet ist.

5. Verfahren nach Anspruch 3, wobei das Kommunizieren der Bakeninformation an die erste Verkehrsanzeigekartengruppe in dem Format mit niedrigem Energieverbrauch umfasst:
Kommunizieren von sowohl einem Lieferverkehrsanzeigekarten-Informationselement als auch einem ersten Verkehrsanzeigekarten-Informationselement an die erste Verkehrsanzeigekartengruppe innerhalb eines definierten Zeitintervalls, wobei das erste Verkehrsanzeigekarten-Informationselement der ersten Verkehrsanzeigekartengruppe zugeordnet ist, und das definierte Zeitintervall eine derartige Dauer hat, dass die der ersten Verkehrsanzeigekartengruppe zugeordnete drahtlose Vorrichtung nur ein Mal aktiviert wird, um sowohl das Lieferverkehrsanzeigekarten-Informationselement als auch das erste Verkehrsanzeigekarten-Informationselement zu empfangen.

6. Verfahren nach Anspruch 1, ferner umfassend eines von:
einer Angabe des Energiestatus der drahtlosen Vorrichtung (110) in einem Feld einer Assoziationssignalisierungsnachricht; und
einer Angabe des Energiestatus der drahtlosen Vorrichtung (110) unter Verwendung einer dedizierten Signalisierung, wobei die dedizierte Signalisierung ausgeführt wird, nachdem die drahtlose Vorrichtung (110) dem Zugangspunkt (120) zugeordnet ist.

7. Verfahren nach einem der Ansprüche 1 bis 6, wobei die zweite Zugangsgruppe unter der Vielzahl von Zugangsgruppen eine niedrigste Last aufweist.

8. Verfahren nach Anspruch 1, wobei eine Vorrichtung mit niedriger Energie eines oder mehrere von Folgendem umfasst:
eine batteriebetriebene Vorrichtung, die eine Batterielebensdauer unter einem Batterielebensdauerschwellenwert aufweist;
eine Vorrichtung mit einer Batteriekapazität unter einem Batteriekapazitätsschwellenwert; und
eine nicht an den Stromkreis angeschlossene Vorrichtung.

9. Zugangspunkt (120), umfassend:
ein oder mehrere Prozessoren (920), die konfiguriert sind zum:
Bestimmen eines Energiestatus einer drahtlosen Vorrichtung (110), wobei der Energiestatus eine von einer Vorrichtung mit niedriger Energie und einer Vorrichtung mit hoher Energie umfasst;
Bestimmen einer Zugangsgruppe von einer Vielzahl von Zugangsgruppen, der die drahtlose Vorrichtung (110) zuzuweisen ist, wobei ein oder mehrere Prozessoren konfiguriert sind, um zu bestimmen, ob eine Last einer ersten Zugangsgruppe unter einem Lastschwellenwert liegt;
Zuweisen der drahtlosen Vorrichtung (110) zu der ersten Zugangsgruppe bei der Bestimmung, dass die drahtlose Vorrichtung (110) eine Vorrichtung mit niedriger Energie ist und dass die Last der ersten Zugangsgruppe unter dem Lastschwellenwert liegt, wobei die erste Zugangsgruppe für drahtlose Vorrichtungen vorgesehen ist, die Bakeninformation in einem Format mit niedrigem Energieverbrauch empfangen sollen;
Zuweisen der drahtlosen Vorrichtung (110) zu einer zweiten Zugangsgruppe, die sich von der ersten Zugangsgruppe unterscheidet, bei der Bestimmung, dass die drahtlose Vorrichtung (110) eine Vorrichtung mit niedriger Energie ist und dass die Last der ersten Zugangsgruppe nicht unter dem Lastschwellenwert liegt; und
Kommunizieren der Bakeninformation an die erste Zugangsgruppe in dem Format mit niedrigem Energieverbrauch.

10. Zugangspunkt nach Anspruch 9, wobei die Vielzahl von Zugangsgruppen mindestens eines von Verkehrsanzeigekartengruppen, periodisch eingeschränkten Zugangsfenstergruppen und eingeschränkten Zugangsfenstergruppen umfasst.

11. Zugangspunkt nach Anspruch 9, wobei die erste Zugangsgruppe eine erste Verkehrsanzeigekartengruppe ist und die Bakeninformation ein Lieferverkehrsanzeigekarten-Informationselement und ein erstes Verkehrsanzeigekarten-Informationselement umfasst, das von der drahtlosen Vorrichtung (110) verwendet wird, um Daten zu senden oder zu empfangen, wobei das erste Verkehrsanzeigekarten-Informationselement der ersten Verkehrsanzeigekartengruppe zugeordnet ist.

12. Zugangspunkt nach Anspruch 11, wobei der eine oder die mehreren Prozessoren (920), die konfiguriert sind, um die Bakeninformation an die erste Verkehrsanzeigekartengruppe in einem Format mit niedrigen Energieverbrauch zu kommunizieren, einen oder mehrere Prozessoren (920) umfassen, die konfiguriert sind, um sowohl ein Lieferverkehrsanzeigekarten-Informationselement als auch ein erstes Verkehrsanzeigekarten-Informationselement an die erste Verkehrsanzeigekartengruppe zur gleichen Zeit zu kommunizieren, wobei das erste Verkehrsanzeigekarten-Informationselement in dem Lieferverkehrsanzeigekarten-Informationselement enthalten ist und der ersten Verkehrsanzeigekartengruppe zugeordnet ist.

13. Zugangspunkt nach Anspruch 11, wobei der eine oder die mehreren Prozessoren (920), die konfiguriert sind, um die Bakeninformation an die erste Verkehrsanzeigekartengruppe in dem Format mit niedrigem Energieverbrauch zu kommunizieren, einen oder mehrere Prozessoren (920) umfassen, die konfiguriert sind, um sowohl ein Lieferverkehrsanzeigekarten-Informationselement als auch ein erstes Verkehrsanzeigekarten-Informationselement an die erste Verkehrsanzeigekartengruppe innerhalb eines definierten Zeitintervalls zu kommunizieren, wobei das erste Verkehrsanzeigekarten-Informationselement der ersten Verkehrsanzeigekartengruppe zugeordnet ist, und das definierte Zeitintervall eine derartige Dauer hat, dass die der ersten Verkehrsanzeigekartengruppe zugeordnete drahtlose Vorrichtung nur ein Mal aktiviert wird, um sowohl das Lieferverkehrsanzeigekarten-Informationselement als auch das erste Verkehrsanzeigekarten-Informationselement zu empfangen.

14. Zugangspunkt nach Anspruch 9, wobei der eine oder die mehreren Prozessoren (920) ferner konfiguriert sind, um eines von Folgendem zu empfangen:
einer Angabe des Energiestatus der drahtlosen Vorrichtung (110) in einem Feld einer Assoziationssignalisierungsnachricht; und
einer Angabe des Energiestatus der drahtlosen Vorrichtung (110) unter Verwendung einer dedizierten Signalisierung, wobei die dedizierte Signalisierung ausgeführt wird, nachdem die drahtlose Vorrichtung (110) dem Zugangspunkt (120) zugeordnet ist.

15. Zugangspunkt nach Anspruch 9, wobei eine Vorrichtung mit niedriger Energie eines oder mehrere von Folgendem umfasst:
eine batteriebetriebene Vorrichtung, die eine Batterielebensdauer unter einem Batterielebensdauerschwellenwert aufweist;
eine Vorrichtung mit einer Batteriekapazität unter einem Batteriekapazitätsschwellenwert; und
eine nicht an den Stromkreis angeschlossene Vorrichtung.

## Revendications

1. Procédé (600) dans un point d'accès (120), comprenant :
la détermination (604) d'un état énergétique d'un dispositif sans fil (110), l'état énergétique comprenant l'un parmi un dispositif à basse énergie et un dispositif à haute énergie ;
la détermination (608) d'un groupe d'accès d'une pluralité de groupes d'accès auquel il faut allouer le dispositif sans fil (110), dans lequel la détermination du groupe d'accès comprend le fait de déterminer si une charge d'un premier groupe d'accès est inférieure à un seuil de charge ;
l'allocation (612) du dispositif sans fil (110) au premier groupe d'accès lorsqu'on détermine que le dispositif sans fil (110) est un dispositif à basse énergie et que la charge du premier groupe d'accès est inférieure au seuil de charge, le premier groupe d'accès étant pour des dispositifs sans fil qui doivent recevoir des informations de balise dans un format à faible consommation énergétique ;
l'allocation du dispositif sans fil (110) à un deuxième groupe d'accès autre que le premier groupe d'accès lorsqu'on détermine que le dispositif sans fil (110) est un dispositif à basse énergie et que la charge du premier groupe d'accès n'est pas inférieure au seuil de charge ; et
la communication (616) des informations de balise au premier groupe d'accès dans le format à faible consommation énergétique.

2. Procédé selon la revendication 1, dans lequel la pluralité de groupes d'accès comprend au moins l'un parmi des groupes de cartes d'indication de trafic, des groupes de fenêtres d'accès limité périodique et des groupes de fenêtres d'accès limité.

3. Procédé selon la revendication 1, dans lequel le premier groupe d'accès est un premier groupe de cartes d'indication de trafic, et les informations de balise comprennent un élément d'information de carte d'indication de trafic de distribution et un premier élément d'information de carte d'indication de trafic utilisé par le dispositif sans fil pour envoyer ou recevoir des données, le premier élément d'information de carte d'indication de trafic étant associé au premier groupe de cartes d'indication de trafic.

4. Procédé selon la revendication 3, dans lequel la communication des informations de balise au premier groupe de cartes d'indication de trafic dans le format à faible consommation énergétique comprend :
la communication à la fois d'un élément d'information de carte d'indication de trafic de distribution et d'un premier élément d'information de carte d'indication de trafic au premier groupe de cartes d'indication de trafic au même moment, le premier élément d'information de carte d'indication de trafic étant contenu au sein de l'élément d'information de carte d'indication de trafic de distribution et associé au premier groupe de cartes d'indication de trafic.

5. Procédé selon la revendication 3, dans lequel la communication des informations de balise au premier groupe de cartes d'indication de trafic dans le format à faible consommation énergétique comprend :
la communication à la fois d'un élément d'information de carte d'indication de trafic de distribution et d'un premier élément d'information de carte d'indication de trafic au premier groupe de cartes d'indication de trafic au sein d'un intervalle de temps défini, le premier élément d'information de carte d'indication de trafic étant associé au premier groupe de cartes d'indication de trafic, et l'intervalle de temps défini ayant une durée telle que le dispositif sans fil alloué au premier groupe de cartes d'indication de trafic ne se réveille qu'une fois pour recevoir à la fois l'élément d'information de carte d'indication de trafic de distribution et le premier élément d'information de carte d'indication de trafic.

6. Procédé selon la revendication 1, comprenant en outre la réception de l'une parmi :
une indication de l'état énergétique du dispositif sans fil (110) dans un champ d'un message de signalisation d'association ; et
une indication de l'état énergétique du dispositif sans fil (110) en utilisant une signalisation dédiée, la signalisation dédiée étant mise en oeuvre après que le dispositif sans fil (110) s'associe au point d'accès (120).

7. Procédé selon l'une quelconque des revendications 1 à 6, dans lequel le deuxième groupe d'accès a une charge la plus basse parmi la pluralité de groupes d'accès.

8. Procédé selon la revendication 1, dans lequel un dispositif à basse énergie comprend un ou plusieurs parmi :
un dispositif alimenté par batterie qui a une autonomie de batterie inférieure à un seuil d'autonomie de batterie ;
un dispositif avec une capacité de batterie inférieure à un seuil de capacité de batterie ; et
un dispositif qui n'est pas branché.

9. Point d'accès (120), comprenant :
un ou plusieurs processeurs (920) configurés pour :
déterminer un état énergétique d'un dispositif sans fil (110), l'état énergétique comprenant l'un parmi un dispositif à basse énergie et un dispositif à haute énergie ;
déterminer un groupe d'accès d'une pluralité de groupes d'accès auquel il faut allouer le dispositif sans fil (110), le ou les processeurs étant configurés pour déterminer si une charge d'un premier groupe d'accès est inférieure à un seuil de charge ;
allouer le dispositif sans fil (110) au premier groupe d'accès lorsqu'on détermine que le dispositif sans fil (110) est un dispositif à basse énergie et que la charge du premier groupe d'accès est inférieure au seuil de charge, le premier groupe d'accès étant pour des dispositifs sans fil qui doivent recevoir des informations de balise dans un format à faible consommation énergétique ;
allouer le dispositif sans fil (110) à un deuxième groupe d'accès autre que le premier groupe d'accès lorsqu'on détermine que le dispositif sans fil (110) est un dispositif à basse énergie et que la charge du premier groupe d'accès n'est pas inférieure au seuil de charge ; et
communiquer les informations de balise au premier groupe d'accès dans le format à faible consommation énergétique.

10. Point d'accès selon la revendication 9, dans lequel la pluralité de groupes d'accès comprend au moins l'un parmi des groupes de cartes d'indication de trafic, des groupes de fenêtres d'accès limité périodique et des groupes de fenêtres d'accès limité.

11. Point d'accès selon la revendication 9, dans lequel le premier groupe d'accès est un premier groupe de cartes d'indication de trafic, et les informations de balise comprennent un élément d'information de carte d'indication de trafic de distribution et un premier élément d'information de carte d'indication de trafic utilisé par le dispositif sans fil (110) pour envoyer ou recevoir des données, le premier élément d'information de carte d'indication de trafic étant associé au premier groupe de cartes d'indication de trafic.

12. Point d'accès selon la revendication 11, dans lequel le ou les processeurs (920) configurés pour communiquer les informations de balise au premier groupe de cartes d'indication de trafic dans le format à faible consommation énergétique comprennent un ou plusieurs processeurs (920) configurés pour communiquer à la fois un élément d'information de carte d'indication de trafic de distribution et un premier élément d'information de carte d'indication de trafic au premier groupe de cartes d'indication de trafic au même moment, le premier élément d'information de carte d'indication de trafic étant contenu au sein de l'élément d'information de carte d'indication de trafic de distribution et associé au premier groupe de cartes d'indication de trafic.

13. Point d'accès selon la revendication 11, dans lequel le ou les processeurs (920) configurés pour communiquer les informations de balise au premier groupe de cartes d'indication de trafic dans le format à faible consommation énergétique comprennent un ou plusieurs processeurs (920) configurés pour communiquer à la fois un élément d'information de carte d'indication de trafic de distribution et un premier élément d'information de carte d'indication de trafic au premier groupe de cartes d'indication de trafic au sein d'un intervalle de temps défini, le premier élément d'information de carte d'indication de trafic étant associé au premier groupe de cartes d'indication de trafic, et l'intervalle de temps défini ayant une durée telle que le dispositif sans fil alloué au premier groupe de cartes d'indication de trafic ne se réveille qu'une fois pour recevoir à la fois l'élément d'information de carte d'indication de trafic de distribution et le premier élément d'information de carte d'indication de trafic.

14. Point d'accès selon la revendication 9, dans lequel le ou les processeurs (920) sont configurés en outre pour recevoir l'une parmi :
une indication de l'état énergétique du dispositif sans fil (110) dans un champ d'un message de signalisation d'association ; et
une indication de l'état énergétique du dispositif sans fil (110) en utilisant une signalisation dédiée, la signalisation dédiée étant mise en oeuvre après que le dispositif sans fil (110) s'associe au point d'accès (120).

15. Point d'accès selon la revendication 9, dans lequel un dispositif à basse énergie comprend un ou plusieurs parmi :
un dispositif alimenté par batterie qui a une autonomie de batterie inférieure à un seuil d'autonomie de batterie ;
un dispositif avec une capacité de batterie inférieure à un seuil de capacité de batterie ; et
un dispositif qui n'est pas branché.
